# FASCICULE DE BREVET EUROPEEN

(11) **EP 2 342 167 B1**
(45) Date de publication et mention de la délivrance du brevet: **15.08.2012**
(21) Numéro de dépôt: 09783726.4
(22) Date de dépôt: 05.10.2009
(51) Int. Cl.: C23C 18/16, C03C 17/38, G02B 5/08, C03C 17/36

(54) **MIROIR**
SPIEGEL
MIRROR

(30) Priorité: 03.10.2008 BE 200800550; 03.10.2008 EP 08165838
(43) Date de publication de la demande: 13.07.2011
(73) Titulaire: AGC Glass Europe, 1170 Bruxelles (Watermael-Boitsfort) (BE)
(72) Inventeur: VENTELON, Lionel, B-6040 Jumet (BE); COSIJNS, Bruno, B - 6040 Jumet (BE); BOULAGER, Pierre, B-6040 Jumet (BE); LECLERCQ, Joseph, B-6040 Jumet (BE)
(74) Mandataire: Verbrugge, Vivien François Emeric
(86) Numéro de dépôt international: PCT/EP2009/062879
(87) Numéro de publication internationale: WO 2010/037867

(56) Documents cités:
- WO-A1-2006/121516
- FR-A- 2 719 839
- VIJAYAKUMAR K P ET AL: "Effect of annealing on the reflectivity of silver films" THIN SOLID FILMS, ELSEVIER-SEQUOIA S.A. LAUSANNE, CH, vol. 82, no. 3, 21 août 1981 (1981-08-21), pages 225-227, XP025730877 ISSN: 0040-6090 [extrait le 1981-08-21]
- KARL H. GUENTHER: "Physical and chemical aspects in the application of thin films on optical elements" APPLIED OPTICS, vol. 23, no. 20, 15 octobre 1984 (1984-10-15), pages 3612-3632, XP002528201
- SHARMA S K ET AL: "Agglomeration in chemically deposited silver films" THIN SOLID FILMS, ELSEVIER-SEQUOIA S.A. LAUSANNE, CH, vol. 66, no. 3, 17 mars 1980 (1980-03-17), pages L51-L53, XP025719698 ISSN: 0040-6090 [extrait le 1980-03-17]
- SHARMA S K ET AL: "Hillock formation, hole growth and agglomeration in thin silver films" THIN SOLID FILMS, ELSEVIER-SEQUOIA S.A. LAUSANNE, CH, vol. 65, no. 3, 1 février 1980 (1980-02-01), pages 339-350, XP025698631 ISSN: 0040-6090 [extrait le 1980-02-01]

## Description

La présente invention a trait à des miroirs et des méthodes de fabrication de tels miroirs.

Les miroirs selon cette invention peuvent avoir diverses applications, par exemple: miroirs domestiques utilisés entre autre dans des meubles, garde-robes ou salles-de-bain; miroirs pour boîtes de maquillage ou poudriers; miroirs utilisés dans l'industrie automobile, comme rétroviseurs de véhicules par exemple. Mais cette invention peut être particulièrement avantageuse pour des miroirs utilisés comme réflecteurs d'énergie solaire.

Les miroirs selon la présente invention peuvent être utilisés en tant que réflecteurs dans des centrales thermiques solaires. De telles installations utilisent l'énergie solaire pour produire dans un premier temps de la chaleur, qui ensuite peut être convertie en électricité ou être utilisée pour la production de vapeur. Les centrales thermiques solaires dans lesquelles des miroirs selon la présente invention peuvent être utilisés comprennent, par exemple, les centrales à capteurs cylindro-paraboliques, les centrales de type "dish", les centrales à tour et les centrales à capteurs paraboliques. Les miroirs selon la présente invention peuvent être utilisés comme réflecteurs plats ou incurvés.

Les miroirs domestiques et miroirs pour applications solaires ont généralement été produits ainsi: une feuille de verre plat (verre flotté, sodo-calcique) est d'abord polie et rincée, puis, sensibilisée au moyen d'une solution de chlorure d'étain; après rinçage, la surface du verre est traditionnellement activée par traitement avec une solution ammoniacale de nitrate d'argent, ensuite une solution d'argenture est appliquée de manière à former une couche d'argent; cette couche d'argent est ensuite recouverte d'une couche protectrice de cuivre. Après un séchage à plus ou moins 50-60°C pendant environ 1 minute (température mesurée au niveau de la couche d'argent ou sur le verre même), une ou plusieurs couches de peinture contenant du plomb sont déposées afin de produire le miroir fini. Il était généralement admis que la combinaison de la couche protectrice de cuivre et de la peinture contenant du plomb était nécessaire pour fournir au miroir des caractéristiques de vieillissement acceptables et une résistance à la corrosion suffisante.

Plus récemment, des miroirs ont été développés qui ne nécessitaient plus la traditionnelle couche protectrice de cuivre, qui pouvaient utiliser des peintures substantiellement sans plomb et qui montraient pourtant des caractéristiques de vieillissement et une résistance à la corrosion acceptables, voire même meilleures. Par exemple, le brevet français FR2719839 décrit des modes de réalisations de miroirs sans couche de cuivre comprenant les étapes suivantes: traitement de la surface du verre avec du chlorure d'étain (sensibilisation) et du chlorure de palladium (activation); rinçage; formation de la couche d'argent; rinçage; traitement de la surface argentée avec du chlorure d'étain (passivation); rinçage et séchage; application d'au moins une couche de peinture. De manière traditionnelle l'étape de séchage de l'argent qui intervient avant l'étape de peinture, est effectuée dans un four, à une température voisine de 50-60°C (température mesurée au niveau de la couche d'argent ou sur le verre même), pendant environ 1 minute. Cette nouvelle génération de miroirs a marqué une belle avancée au regard des miroirs traditionnels avec cuivre.

Une des propriétés très importantes pour un miroir pour application solaire est sa capacité à réfléchir les rayons du soleil, qui est déterminante pour le rendement de la centrale solaire dans laquelle il est installé. En fonctionnement, les rayons du soleil traversent une première fois le substrat en verre du miroir, sont réfléchis sur la couche d'argent, puis traversent une seconde fois le substrat en verre. Pour augmenter les propriétés réflectrices de miroirs solaires, il est connu d'utiliser des feuilles de verre plus fines comme substrat pour les miroirs ou d'utiliser du verre extra-clair, c'est-à-dire un verre avec un contenu total en fer, exprimé en tant que Fe₂O₃, de moins de 0.02 % poids, diminuant ainsi l'effet absorbant du verre à l'égard du rayonnement solaire. Il est également connu d'augmenter la quantité d'argent présente dans la couche réflectrice d'argent: une quantité d'argent aux alentours de 1200-1500 mg/m² peut s'avérer un bon compromis entre de bonnes valeurs de réflexions et un coût acceptable de production. Néanmoins, l'industrie des miroirs solaires est toujours en quête de performances accrues en termes de réflexion lumineuse et énergétique.

Selon un de ses aspects, la présente invention a pour objet un procédé de fabrication d'un miroir selon la revendication 1, les revendications dépendantes présentant des modes de réalisation préférés.

L'invention porte sur un procédé de fabrication d'un miroir comprenant les étapes suivantes:
- une étape de formation d'une couche d'argent sur une surface d'un substrat en verre au cours de laquelle ladite surface est mise en contact avec une solution d'argenture,
- une étape de peinture au cours de laquelle la couche d'argent est recouverte par au moins une couche de peinture, et
- entre l'étape de formation de la couche d'argent et l'étape de peinture, une étape de recuisson de la couche d'argent à une température d'au moins 200°C.

Sauf mention contraire, les températures de recuisson de la couche d'argent mentionnées ici sont les températures mesurées au niveau de la couche d'argent, c'est-à-dire les températures que la couche d'argent aura atteintes. La mesure peut être prise au moyen de sondes placées à la surface de la couche d'argent. Dans la plupart des cas, cette température est équivalente à la température du substrat en verre et les sondes peuvent être placées sur la surface du verre en contact avec la couche d'argent ou celle opposée à la couche d'argent. Dans le cas où l'induction métallique est utilisée pour chauffer la couche d'argent, la température qu'atteint la couche d'argent lors de la recuisson n'est par contre pas équivalente à celle du verre, l'induction métallique ne provoquant pas de manière directe une chauffe dans le verre. Dans le cas de chauffe par micro-ondes ou assistée par micro-ondes, on peut éventuellement constater une différence de température entre la couche d'argent et le verre. Les températures atteintes peuvent alternativement être mesurées par caméra thermique.

Le procédé selon l'invention a l'avantage de pouvoir produire des miroirs ayant une réflexion lumineuse et/ou une réflexion énergétique plus élevée(s) que celle(s) d'un miroir de fabrication identique (entre autre, même composition et épaisseur du substrat en verre, même quantité d'argent sur le verre) ne comprenant qu'une simple étape de séchage de la couche d'argent (typiquement aux alentours de 50-60°C pendant environ 1 minute) et non une étape de recuisson à une température d'au moins 200°C. De plus cette amélioration des propriétés de réflexion du miroir ne se fait pas au détriment d'autres propriétés importantes, par exemple la résistance du miroir à la corrosion et/ou au vieillissement.

Sans vouloir être liés par la théorie, nous pensons qu'une modification au sein de la couche d'argent s'opère lorsque cette couche est soumise à une certaine quantité de chaleur, cette modification provoquant une hausse des réflexions lumineuse et énergétique de miroirs incorporant une telle couche. Nous avons découvert que l'étape traditionnelle de séchage de l'argent n'apporte pas une quantité de chaleur suffisante pour que la modification de l'argent ait lieu. Lors du dépôt de la ou des couches de peinture sur la face argentée du substrat en verre, la couche d'argent est soumise à des températures typiquement de l'ordre de 100 à 180°C, permettant de sécher les couches de peinture. Nous avons découvert que ces étapes de séchage de la peinture apportaient à la couche d'argent une certaine quantité de chaleur permettant d'initier la modification entraînant une hausse de réflexion, mais surtout, nous avons découvert que cette quantité de chaleur n'était pas suffisante pour optimiser la hausse de réflexion et que les valeurs de réflexion pouvaient encore être accrues en apportant une quantité de chaleur supplémentaire à la couche d'argent préalablement au dépôt de peinture. Nous avons alors découvert qu'il ne suffisait pas de prolonger la durée des étapes de séchage traditionnel de la couche d'argent et/ou de séchage des couches de peinture pour optimiser la hausse de réflexion, mais qu'il était nécessaire de franchir un seuil de température au sein de la couche d'argent; nous avons trouvé que ce seuil était situé à une température supérieure aux températures utilisées couramment dans les étapes de séchage des peintures typiques pour miroirs.

De préférence l'étape de recuisson de la couche d'argent a lieu à une température supérieure à 200°C ou supérieure ou égale à 225°C, 250°C, 275°C, 300°C, 325°C, 350°C, 375°C ou 400°C. De préférence la température de recuisson n'excède pas 700°C, 650°C, 600°C, 575°C ou 550°C. Des températures trop élevées peuvent détériorer la couche d'argent (par exemple, apparition de trous provoquant une baisse de réflectivité) et le substrat en verre ne peut dépasser une température de 600°C au risque de devenir visqueux. La durée de l'étape de recuisson dépend de la température de recuisson. De manière générale, à température équivalente, les réflexions augmentent avec la durée de recuisson et le temps de recuisson nécessaire pour atteindre des valeurs de réflexions identiques est plus court au plus la température de recuisson est élevée. La durée de l'étape de recuisson peut de préférence être supérieure ou égale à 1, 2, 3 ou 5 minutes; elle peut être inférieure ou égale à 20, 15, 10, 8 ou 5 minutes. Sans vouloir être liés par la théorie, nous avons trouvé qu'il existe un seuil au-delà duquel les réflexions lumineuse et énergétique n'augmentent plus, c'est-à-dire un seuil au-delà duquel un apport supplémentaire de quantité de chaleur à la couche d'argent ne provoque plus de hausse de réflexion.

Dans certains modes de réalisation de l'invention, la couche d'argent peut être séchée de manière connue (∼50-60°C ∼1 min) avant l'étape de recuisson selon l'invention.

L'étape de recuisson de la couche d'argent peut s'effectuer par toute méthode de chauffage connue, par exemple soit en utilisant un four à rayonnement infrarouge ou un four à convection, fours qui peuvent fonctionner sous atmosphère d'air ou sous atmosphère inerte, par exemple d'argon ou d'azote, et qui peuvent être par exemple des fours-tunnels ou des autoclaves, soit par induction métallique, soit encore par micro-ondes. Les différentes méthodes de chauffage peuvent également être utilisées en combinaison. La recuisson sous atmosphère inerte peut retarder et/ou empêcher la formation de trous dans la couche d'argent, trous qui entraînent une augmentation de la transmittance et une baisse de la réflectivité des miroirs.

Une méthode de chauffage par induction est par exemple proposée dans la demande EP08165838, dont priorité est revendiquée ici, et qui est incorporée ici par référence.

L'invention décrite dans la demande EP08165838 concerne un procédé continu de chauffage sélectif d'au moins une couche mince électro-conductrice (par exemple une couche mince de quelques dizaines de nm d'argent) recouvrant une surface d'un substrat non conducteur (par exemple un substrat en verre) par induction de courants de Foucault dans la totalité du volume de la couche, comprenant le défilement continu du substrat recouvert par la couche au travers d'un dispositif inducteur électromagnétique alimenté par un courant électrique alternatif haute fréquence selon lequel les courants de Foucault induits dans la couche sont générés par deux champs magnétiques, le premier comprenant des lignes de champ longitudinales parallèles à la direction du défilement de l'ensemble substrat-couche conductrice et le deuxième des lignes transversales rayonnant radialement autour de parties allongées de l'inducteur. L'invention se caractérise par le fait qu'on réalise le champ transversal de manière à ce que des plans tracés perpendiculairement à la surface de la couche et passant par les parties allongées de l'inducteur situées respectivement au-dessus et en dessous de l'ensemble substrat-couche ne se confondent pas mais soient au contraire distincts et parallèles. Selon cette invention également, l'inducteur est de manière préférentielle constitué d'un petit nombre de spires métalliques parcourues par un courant électrique haute fréquence au travers desquelles on fait défiler en continu le substrat recouvert. Les spires sont de préférence disposées chacune dans des plans parallèles et les plans distincts sont obtenus en inclinant les plans définis par chaque spire par rapport à la direction du défilement de l'ensemble substrat-couche d'un angle aigu α choisi dans la plage allant de 5 degrés à 50 degrés d'angle.

Pour la chauffe par induction de miroirs ayant une couche d'argent d'épaisseur comprise entre 65 et 155 nm, par exemple, les paramètres suivants sont préférentiellement utilisés:
- une fréquence d'au moins 800 kHz ou 1000 kHz, de préférence au moins 1100 kHz ou 1200 kHz; une fréquence d'au plus 2000 kHz ou 1700 kHz, de préférence au plus 1600 kHz ou 1500 kHz;
- une densité d'énergie d'au plus 3 W/cm² ou 2.5 W/cm², de préférence d'au plus 2 W/cm²; une densité d'énergie aux alentours de 1.5 W/cm².

Avantageusement, la couche d'argent est formée sur un substrat en verre plat, flotté, de préférence un verre extra-clair, c'est-à-dire un verre avec un contenu total en fer, exprimé en tant que Fe₂O₃, de moins de 0.02 % poids. Le verre extra-clair favorise de bonnes valeurs de réflexion.

De préférence, la quantité d'argent déposée sur le verre est supérieure ou égale à 800 mg/m², 1000 mg/m², 1200 mg/m² ou 1400 mg/m²; elle est de préférence inférieure à 2000 mg/m², 1800 mg/m², 1600 mg/m² ou 1500 mg/m². L'épaisseur de la couche d'argent peut être supérieure ou égale à 65 nm, 70 nm, 80 nm, 90 nm, 100 nm, 110 nm, 120 nm, 130 nm ou 140 nm; elle peut être inférieure à 200 nm, 180 nm, 160 nm ou 150 nm. Ces valeurs offrent un bon compromis entre de bonnes valeurs de réflexions et un coût acceptable de production.

Le procédé selon l'invention peut s'appliquer à la fabrication de miroirs ayant une couche protectrice de cuivre ou n'en ayant pas. Les miroirs sans couche de cuivre peuvent être avantageux pour l'environnement.

De manière avantageuse, un traitement de la couche d'argent avec un silane peut être effectué avant l'étape de recuisson. Ceci peut contribuer à la résistance du miroir aux sollicitations mécaniques et/ou à la corrosion.

La peinture recouvrant la couche d'argent est de préférence sans plomb ou substantiellement sans plomb. Ceci peut être avantageux pour l'environnement. "Substantiellement sans plomb" signifie que la proportion en plomb dans la peinture est significativement moindre que la proportion en plomb de peintures contenant du plomb couramment utilisées dans la fabrication de miroirs. La proportion en plomb d'une peinture substantiellement sans plomb telle que définie ici est inférieure à 500 mg/m², préférentiellement inférieure à 400 mg/m² ou de préférence encore inférieure à 300 mg/m². La proportion en plomb d'une peinture sans plomb telle que définie ici est inférieure à 100 mg/m², préférentiellement inférieure à 80 mg/m² ou de préférence encore inférieure à 60 mg/m². Les peintures utilisées peuvent être de type acrylique, epoxy, alkyd ou polyurethane. Elles peuvent être appliquées, par exemple, par rouleau ou rideau.

Selon certains modes de réalisation avantageux de l'invention, des étapes de sensibilisation, activation et/ou passivation peuvent contribuer à la résistance au vieillissement et/ou à la corrosion des miroirs et/ou à leur durabilité. De préférence, les solutions sont mises en contact avec le substrat vitreux durant les étapes successives de fabrication par pulvérisation avec des étapes intermédiaires de rinçage et/ou lavage. Par exemple, durant la fabrication de miroirs, des feuilles de verre peuvent passer à travers des stations successives où les réactifs de sensibilisation, activation, argenture et passivation sont pulvérisés. La solution d'activation peut contenir du bismuth, du chrome, de l'or, de l'indium, du nickel, du palladium, du platine, du rhodium, du ruthénium, du titane, du vanadium ou du zinc, ou un mélange d'au moins deux de ces éléments. Le palladium est généralement préféré. La solution de passivation peut contenir de l'étain, du palladium, du vanadium, du titane, du fer, de l'indium, du cuivre, de l'aluminium, du chrome, du lanthane, du nickel, de l'europium, du zinc, du platine, du ruthénium, du rhodium, du sodium, du zirconium, de l'yttrium ou du cérium, ou un mélange d'au moins deux de ces éléments. L'étain ou le palladium sont généralement préférés.

En pratique, par exemple, sur une ligne de production de miroirs, les feuilles de verre sont généralement transportées le long de la ligne par des convoyeurs à rouleaux. Elles sont tout d'abord polies et rincées avant d'être sensibilisées par exemple au moyen d'une solution de chlorure d'étain pulvérisée sur le verre; elles sont alors rincées à nouveau. Une solution d'activation est ensuite pulvérisée sur les feuilles de verre; cette solution peut être par exemple une solution aqueuse acide de PdCl₂. Les feuilles de verre passent ensuite dans une station de rinçage où de l'eau déminéralisée est pulvérisée et, ensuite, dans la station d'argenture ou une solution traditionnelle d'argenture est pulvérisée, cette solution étant le résultat à la surface du verre d'une combinaison de deux solutions pulvérisées séparément, l'une comprenant un sel d'argent et soit un agent réducteur soit une base, l'autre comprenant soit l'agent réducteur soit la base qui est absent de la solution comprenant le sel d'argent. Le débit et la concentration de la solution d'argenture pulvérisée sur le verre sont contrôlés de manière à former une couche d'argent d'épaisseur souhaitée. Le verre est alors rincé et directement ensuite, une solution aqueuse de, par exemple, SnCl₂ est pulvérisée sur les feuilles de verre alors qu'elles avancent le long du convoyeur. Après un autre rinçage, les miroirs peuvent être traités par pulvérisation d'une solution contenant un silane. Après un dernier rinçage, les feuilles de verre argentées entrent dans une station de séchage conventionnelle à 60°C, puis dans une station de recuisson, par exemple un four à convection d'air chaud, réglée de sorte que la couche d'argent atteigne une température d'au moins 200°C. Les miroirs sont ensuite recouverts d'une ou plusieurs couche(s) de peinture. Chaque couche de peinture est cuite ou séchée avant le dépôt d'une éventuelle autre couche de peinture, par exemple dans un four tunnel. De préférence, la peinture est appliquée sur les substrats argentés sous forme d'un rideau continu de peinture liquide tombant sur les feuilles de verre.

De manière générale, il peut s'avérer difficile de sécher correctement une couche de peinture épaisse au moyen d'une source de chaleur extérieure, par exemple dans un four: une croûte de séchage peut parfois s'observer à la surface de la peinture gênant l'évaporation des solvants et gênant le séchage en profondeur de la couche de peinture. Nous avons découvert que la présente invention peut remédier à ce problème. En effet, l'étape de recuisson intervenant avant l'étape de peinture, le verre et/ou la couche d'argent peuvent être encore chauds lors du dépôt de la couche de peinture. Ceci peut permettre soit de diminuer la température ou la durée de cuisson de la peinture dans le four pour une même épaisseur de peinture, soit d'augmenter l'épaisseur de peinture à cuire pour une même température et un même temps de cuisson au niveau du four de cuisson de la peinture. Cela peut également permettre de diminuer l'effet de croûte de séchage et d'évaporer plus facilement les solvants.

Le procédé selon l'invention peut s'appliquer à la fabrication de miroirs minces, par exemple pour des applications solaires nécessitant des réflecteurs courbes, ayant par exemple une épaisseur supérieure à 0.8 mm, 0.9 mm ou 1.1 mm et/ou inférieure à 2 mm ou 1.5 mm, par exemple une épaisseur d'environ 0.95 ou 1.25 mm; ainsi qu'à la fabrication de miroirs plus épais, par exemple pour des applications solaires à réflecteurs plats, ayant par exemple une épaisseur supérieure à 2 mm ou 2.5 mm et/ou inférieure à 6 mm ou 5 mm.

Selon un autre aspect, la présente invention porte sur des miroirs selon la revendication 7, les revendications dépendantes présentant des modes de réalisation préférés.

Des miroirs selon l'invention comprennent un substrat en verre recouvert d'une couche d'argent, elle-même recouverte d'au moins une couche de peinture, caractérisé en ce que le substrat comprend une strate supérieure du côté de la couche d'argent comprenant de l'argent, et en ce que cette strate enrichie en argent a une épaisseur d'au moins 10 nm, de préférence au moins 20 nm, 30 nm, 40 nm, 50 nm, 60 nm, 70 nm, 80 nm, 90 nm, 100 nm, 110 nm ou 120 nm et plus préférentiellement, au moins 130 nm, 140 nm, 150 nm, 160 nm, 170 nm, 180 nm, 190 nm ou 200 nm. La strate enrichie en argent a de préférence une épaisseur inférieure à 1000 nm, 900 nm, 800 nm ou 700 nm.

De tels miroirs ont l'avantage de présenter une réflexion lumineuse et/ou une réflexion énergétique plus élevée(s) que celle(s) d'un miroir de fabrication identique ne comprenant pas d'argent dans la partie superficielle du substrat ou n'en comprenant que sur une épaisseur moins importante. De plus cette amélioration des propriétés de réflexion du miroir ne se fait pas au détriment d'autres propriétés importantes, par exemple la résistance du miroir à la corrosion et/ou au vieillissement.

La présence d'argent dans la couche supérieure du substrat (côté couche de peinture) peut être contrôlée sur des profils XPS ou SIMS dynamique, après avoir décapé la peinture et dissous la couche d'argent du miroir. La méthode SIMS est préférée car plus adaptée à observer l'argent présent à de telles profondeurs dans le substrat en verre.

Les miroirs selon l'invention peuvent présenter des quantités d'argent présentes dans le substrat, mesurées par SIMS, d'au moins 0.01 mg/m², de préférence au moins 0.02 mg/m², 0.05 mg/m² ou 0.1 mg/m²; ces quantités peuvent être inférieures à 2 mg/m², 1.5 mg/m² ou 1 mg/m². Les rapports d'intensité I(Ag)/I(Si), déterminés par SIMS en surface du substrat, peuvent être d'au moins 0.0010, 0.0020 ou 0.0030; ces rapports peuvent être inférieurs à 0.05 ou 0.04.

Selon des modes de réalisations préférés de l'invention, le substrat en verre des miroirs peut également comprendre une strate supérieure du côté de la couche d'argent comprenant du palladium. Cette strate enrichie en palladium a de préférence une épaisseur d'au moins 5 nm, 6 nm, 7 nm, 8 nm, 9 nm ou 10 nm; elle a de préférence une épaisseur inférieure à 20 nm, 15 nm ou 13 nm.

La présence de palladium dans la couche supérieure du substrat (côté couche de peinture) peut être contrôlée sur des profils XPS, après avoir décapé la peinture et dissous la couche d'argent du miroir.

Les miroirs obtenus par la présente invention peuvent avoir une réflexion lumineuse selon la norme ISO 9050:2003 (mesurée à travers la surface du verre, avec un angle d'incidence de 8° par rapport à la normale, sous illuminant D65) supérieure ou égale à 85%, 90%, 91%, 92%, 93%, 94% ou 95%. Les miroirs obtenus par la présente invention peuvent avoir une réflexion énergétique selon la norme ISO 9050:2003 (mesurée à travers la surface du verre, avec un angle d'incidence de 8° par rapport à la normale) supérieure ou égale à 82%, 84%, 85% ou 86% sur verre clair ou supérieure ou égale à 90%, 92% ou 93% sur verre extra-clair.

Des modes de réalisation particuliers de l'invention vont à présent être décrits, en tant qu'exemples. Des exemples comparatifs, ne formant pas part de l'invention, sont également présentés. Les données relatives à ces exemples et exemples comparatifs sont présentés dans les tables I, II, III et IV.

### Exemples 1-42 Et exemples comparatifs 1-7

Les exemples 1 à 42 et les exemples comparatifs 1 à 7 sont des miroirs comprenant un substrat de verre "float" de 4 mm d'épaisseur. Les exemples 1 à 26 et les exemples comparatifs 1 à 4 ont été réalisés sur un verre clair d'une certaine composition, les exemples 27 à 36 et l'exemple comparatif 5, sur un verre clair d'une autre composition, et enfin les exemples 37 à 42 et les exemples comparatifs 6 et 7, sur un verre extra-clair. Tous les exemples comportent une quantité d'argent de 1400 mg/m²; c'est le cas également des exemples comparatifs, sauf de l'exemple comparatif 1 qui comprend 850 mg d'argent par m² de verre.

Tous les miroirs selon les exemples ont subi, outre un séchage de la couche d'argent à environ 60°C, une recuisson de la couche d'argent selon des paramètres donnés dans la Table I. Les températures de recuisson qui y sont données sont celles de l'atmosphère du four. Les exemples comparatifs 1 à 3 et 5 à 7 n'ont pas subi de recuisson, mais un simple séchage en accord avec l'art antérieur. L'exemple comparatif 4 a subi une recuisson à une température inférieure à celles prévues par la présente invention.

Tous les miroirs selon ces exemples et exemples comparatifs ont subi une étape de sensibilisation par SnCl₂ et une étape d'activation au PdCl₂ avant l'argenture, ainsi qu'une étape de passivation au SnCl₂ après l'argenture. Les miroirs selon les exemples 37 à 42 et les exemples comparatifs 1 à 4 et 6 et 7 ont ensuite été recouverts d'une première couche de peinture alkyd-melamine de 25 µm séchée à 100°C pendant environ 1 minute, puis d'une seconde couche de peinture alkyd-melamine d'environ 30 µm séchée à 160° C pendant environ 3 minutes. Les exemples 38, 40 et 42 et les exemples comparatifs 2, 6 et 7 ont ensuite encore été recouverts d'une troisième couche de peinture alkyd-melamine d'environ 30 µm séchée à 160°C pendant environ 3 minutes.

Les valeurs de réflexion lumineuse (RL) et de réflexion énergétique (RE) sont données dans la Table I. Pour les exemples comparatifs peints, des valeurs de réflexion sont aussi données après séchage de la peinture. Le terme "détruit" dans la Table I a été donné lorsque la recuisson a été trop forte et que la couche d'argent a été détériorée.

On peut voir dans ces valeurs que les étapes de séchage de la peinture apportent à la couche d'argent une certaine quantité de chaleur permettant d'augmenter les réflexions, de même qu'une recuisson à 130°C pendant 10 minutes, mais que les valeurs de réflexion sont significativement accrues lorsqu'on apporte une quantité de chaleur supplémentaire à la couche d'argent par une recuisson à une température d'au moins 200°C.

Les rayons UV sont connus pour détériorer les propriétés réfléchissantes des miroirs après une longue exposition au soleil comme c'est le cas pour les miroirs solaires. La transmission aux UV (T_{UV}) de miroirs non peints selon les exemples 1 à 8 et les exemples comparatifs 2 ou 3 a été mesurée selon la norme internationale IS09050. Les résultats sont donnés dans la Table I. Une transmission aux UV moindre indique un miroir qui résistera mieux dans le temps aux UV. Ces résultats montrent que la transmission aux UV fluctue selon les paramètres de recuisson appliqués aux miroirs. Il peut donc apparaître avantageux de sélectionner les paramètres de recuisson afin d'optimiser les valeurs de RL et RE avec celle de T_{UV}, en choisissant des RL et RE élevées et une T_{UV} la plus faible possible.

### Exemples 43-48 Et exemple comparatif 8

Les exemples 43 à 48 et l'exemple comparatif 8 sont des miroirs comprenant un substrat de verre "float", une couche d'argent contenant 800 mg/m² d'argent et au moins une couche de peinture.

Tous les miroirs selon ces exemples ont subi une recuisson de la couche d'argent selon l'invention, selon des paramètres donnés dans la Table II. Les températures de recuisson qui y sont données sont celles de l'atmosphère du four. L'exemple comparatif 8 n'a pas subi de recuisson, mais un simple séchage en accord avec l'art antérieur. Les miroirs ont également été soumis à une étape de cuisson de la peinture, de façon classique (cuisson à 160°C - 3 minutes). Tous les miroirs selon ces exemples et exemple comparatif ont subi une étape de sensibilisation par SnCl₂ et une étape d'activation au PdCl₂ avant l'argenture, ainsi qu'une étape de passivation au SnCl₂ après l'argenture.

Les miroirs ont ensuite été décapés à l'aide d'un décapant pour retirer la ou les couches de peinture, puis la couche d'argent a été dissoute, selon deux procédés différents, de façon à obtenir le substrat seul. Dans les deux cas, les miroirs ont été trempés dans une solution pendant 5 à 10 secondes; dans le premier cas, il s'agit d'une solution aqueuse d'HNO₃ à 65%, dans le second, il s'agit d'une solution comprenant 1 /5 d'H₂O₂ à 30%, 1 /5 de NH₃ à 25% et 3/5 d'eau déminéralisée.

Les substrats ont été analysés par XPS et SIMS et les résultats obtenus sont donnés dans la table II. L'analyse SIMS démontre la présence d'argent à la surface du substrat jusqu'à une profondeur entre 142 et 644 nm selon les exemples. L'analyse XPS est une bonne méthode pour immédiatement voir s'il y a de l'argent dans le substrat, mais n'est pas suffisamment sensible pour mesurer l'épaisseur totale de la strate enrichie en argent. Par contre l'analyse XPS est une bonne méthode pour distinguer la profondeur jusqu'à laquelle le palladium est présent dans le substrat.

### Exemples 49-54

Les exemples 49 à 54 sont des verres argentés comprenant un substrat de verre "float" et une couche d'argent contenant 800 mg/m² d'argent. Tous ces exemples ont subi une recuisson de la couche d'argent selon l'invention. Des mesures de RL ont été effectuées avant recuisson, d'autres après. Les augmentations de RL observées après recuisson sont données dans la Table III. Ces résultats montrent qu'il est possible par différents "schémas" de recuisson (combinaison temps-température) d'arriver à des hausse de RL comparables.

### Exemples 55-57 Et exemple comparatif 9

Les exemples 55 à 57 et l'exemple comparatif 9 sont des verres "float" extra-clair de 4 mm d'épaisseur, argentés pour former une couche d'argent contenant 1400 mg/m² d'argent. Tous ces exemples et exemple comparatif ont subi une étape de sensibilisation par SnCl₂ et une étape d'activation au PdCl₂ avant l'argenture, ainsi qu'une étape de passivation au SnCl₂ après l'argenture. Les exemples 55 à 57 ont subi une recuisson de la couche d'argent selon l'invention, en utilisant une méthode de chauffe par induction. Les paramètres de recuisson, ainsi que les mesures de réflexion lumineuse, sont donnés dans la Table IV. Les températures de recuisson qui y sont données sont celles atteintes par la couche d'argent (mesurées par caméra infrarouge). L'exemple comparatif 9 n'a pas subi de recuisson, mais un simple séchage en accord avec l'art antérieur.

| TABLE I | substrat. verre "float"4 mm | argenture | *(séchage)* recuisson | avant peinture | | T_{UV} [%] | peinture | après peinture | |
|---|---|---|---|---|---|---|---|---|---|
| | | | | RL[%] | RE [%] | | | RL [%] | RE [%] |
| Ex.Comp.1 | clair compo I | 850 mg/m² | (*60*°*C*- *1 min*) | 90,01 | | | 2 couches alkyd-melamine | 91,21 | |
| Ex.Comp.2 | clair compo I | 1400 mg/m² | (*60*°*C* - *1 min)* | 91,41 | 84,01 | 51,9 | 3 couches alkyd-melamine | 92,53 | 84,90 |
| Ex.Comp.3 | clair compo I | 1400 mg/m² | (*60*°*C* - *1 min*) | 91,41 | 84,01 | 51,9 | 2 couches alkyd-melamine | 91,99 | 84,40 |
| Ex Comp 4 | clair compo I | 1400 mg/m² | 130°C - 10 min | 91,90 | 84,44 | | 2 couches alkyd-melamine | 92,16 | 84,66 |
| Ex.1 | clair compo I | 1400 mg/m² | 200°C - 10 min | 92,70 | 85,02 | 49,1 | | | |
| Ex.2 | clair compo I | 1400 mg/m² | 200°C - 20 min | 92,85 | 85,14 | 50,2 | | | |
| Ex 3 | clair compo I | 1400 mg/m² | 250°C -10 min | 92,88 | 85,26 | 51,1 | | | |
| Ex.4 | clair compo I | 1400 mg/m² | 250°C - 20 min | 93,50 | 85,62 | 50,2 | | | |
| Ex.5 | clair compo I | 1400 mg/m² | 300°C - 10 min | 93,07 | 85,36 | 54 | | | |
| Ex.6 | clair compo I | 1400 mg/m² | 300°C - 20 min | 92,80 | 85,10 | 52,5 | | | |
| Ex.7 | clair compo I | 1400 mg/m² | 350°C -10 min | 92,63 | 84,97 | 56,1 | | | |
| Ex.8 | clair compo I | 1400 mg/m² | 350°C - 20 min | 93,11 | 85,33 | 52,3 | | | |
| Ex.9 | clair compo I | 1400 mg/m² | 400°C - 3 min | 91,56 | 84,18 | | | | |
| Ex.10 | clair compo I | 1400 mg/m² | 400°C - 5 min | 92,28 | 84,81 | | | | |
| Ex.11 | clair compo I | 1400 mg/m² | 400°C -10 min | 93,13 | 85,35 | | | | |
| Ex.12 | clair compo I | 1400 mg/m² | 450°C - 3 min | 92,61 | 84,95 | | | | |
| Ex.13 | clair compo I | 1400 mg/m² | 450°C - 5 min | 92,97 | 85,30 | | | | |
| Ex.14 | clair compo I | 1400 mg/m² | 450°C -10 min | détruit | détruit | | | | |
| Ex 15 | clair compo I | 1400 mg/m² | 500°C - 3 min | 92,07 | 84,61 | | | | |
| Ex.16 | clair compo I | 1400 mg/m² | 500°C - 5 min | 92,83 | 85,21 | | | | |
| Ex. 17 | clair compo I | 1400 mg/m² | 500°C -10 min | détruit | détruit | | | | |
| Ex.18 | clair compo I | 1400 mg/m² | 550°C - 3 min | 92,76 | 85,09 | | | | |
| Ex.19 | clair compo I | 1400 mg/m² | 550°C - 5 min | 93,31 | 85,40 | | | | |
| Ex.20 | clair compo I | 1400 mg/m² | 550°C -10 min | détruit | détruit | | | | |
| Ex.21 | clair compo I | 1400 mg/m² | 600°C - 3 min | 92,49 | 84,90 | | | | |
| Ex.22 | clair compo I | 1400 mg/m² | 600°C - 5 min | détruit | détruit | | | | |
| Ex.23 | clair compo I | 1400 mg/m² | 600°C 10 min | détruit | détruit | | | | |
| Ex.24 | clair compo I | 1400 mg/m² | 650°C - 3 min | détruit | détruit | | | | |
| Ex.25 | clair compo I | 1400 mg/m² | 650°C - 5 min | détruit | détruit | | | | |
| Ex.26 | clair compo I | 1400 mg/m² | 650°C - 10 min | détruit | détruit | | | | |
| Ex.Comp.5 | clair compo II | 1400 mg/m² | (60°C- 1 min) | 91,86 | 85,53 | | | | |
| Ex.27 | clair compo II | 1400 mg/m² | 400°C - 3 min | 91,99 | 85,44 | | | | |
| Ex.28 | clair compo II | 1400 mg/m² | 400°C - 5 min | 92,64 | 85,93 | | | | |
| Ex.29 | clair compo II | 1400 mg/m² | 400°C -10 min | 93,11 | 86,32 | | | | |
| Ex.30 | clair compo II | 1400 mg/m² | 500°C - 3 min | 93,03 | 86,32 | | | | |
| Ex.31 | clair compo II | 1400 mg/m² | 500°C - 5 min | 93,18 | 86,37 | | | | |
| Ex.32 | clair compo II | 1400 mg/m² | 550°C - 3 min | 92,97 | 86,24 | | | | |
| Ex.33 | clair compo II | 1400 mg/m² | 550°C - 5 min | 92,75 | 86,02 | | | | |
| Ex.34 | clair compo II | 1400 mg/m² | 550°C -10 min | détruit | détruit | | | | |
| Ex.35 | clair compo II | 1400 mg/m² | 570°C - 3 min | détruit | détruit | | | | |
| Ex.36 | clair compo II | 1400 mg/m² | 570°C - 5 min | détruit | détruit | | | | |
| Ex.Comp.6 | extra-clair | 1400 mg/m² | *(60 °C - 1 min)* | 93,64 | 92,28 | | 2 couches alkyd-melamine | 94,37 | 92,84 |
| Ex.Comp.7 | extra-clair | 1400 mg/m² | *(60°C* - *1 min)* | 93,64 | 92,28 | | 3 couches alkyd-melamine | 94,69 | 93,13 |
| Ex.37 | extra-clair | 1400 mg/m² | 250°C - 20 min | 94,90 | 93,33 | | 2 couches alkyd-melamine | 94,72 | 93,18 |
| Ex.38 | extra-clair | 1400 mg/m² | 400°C -10 min | 95,62 | 93,85 | | 3 couches alkyd-melamine | 95,40 | 93,71 |
| Ex.39 | extra-clair | 1400 mg/m² | 450°C - 5 min | 94,77 | 93,19 | | 2 couches alkyd-melamine | 94,93 | 93,34 |
| Ex.40 | extra-clair | 1400 mg/m² | 450°C - 5 min | 94,77 | 93,19 | | 3 couches alkyd-melamine | 94,92 | 93,25 |
| Ex.41 | extra-clair | 1400 mg/m² | 550°C - 3 min | 94,73 | 93,16 | | 2 couches alkyd-melamine | 94,61 | 93,05 |
| Ex.42 | extra-clair | 1400 mg/m² | 550°C - 3 min | 94,73 | 93,16 | | 3 couches alkyd-melamine | 94,90 | 93,30 |

| Table II | (*séchage*) recuisson | peinture(s) | dissolution de la couche d'argent | résultats SIMS | | | résultats XPS | |
|---|---|---|---|---|---|---|---|---|
| | | | | épaisseur de la strate enrichie en Ag [nm] | I(Ag)/I(Si) | quantité d'Ag dans la strate enrichie en Ag [mg/m²] | épaisseur de la strate enrichie en Pd [nm] | épaisseur de la strate enrichie en Ag [nm] |
| Ex.Comp.8 | (60°C - 1 *min*) | cuisson à 160°C - 3 min | HNO3 | - | - | - | 0 | 0 |
| Ex.43 | 250°C -18 min | cuisson à 160°C - 3 min | HNO3 | 142 | 0.0014 | 0.02 | 7.0 | présence d'Ag |
| Ex.44 | 250°C -18 min | cuisson à 160°C - 3 min | H2O2/NH3 | 170 | 0.0032 | 0.07 | 8.7 | présence d'Ag |
| Ex.45 | 400°C - 6 min | cuisson à 160°C - 3 min | HNO3 | 365 | 0.0030 | 0.3 | 7.0 | présence d'Ag |
| Ex.46 | 400°C - 6 min | cuisson à 160°C - 3 min | H2O2/NH3 | 400 | 0.0016 | 0.3 | 7.8 | présence d'Ag |
| Ex.47 | 550°C - 2.5 min | cuisson à 160°C - 3 min | HNO3 | 644 | 0.0050 | 0.8 | 7.0 | présence d'Ag |
| Ex.48 | 550°C - 2.5 min | cuisson à 160°C - 3 min | H2O2/NH3 | 500 | 0.0340 | 0.4 | 7.0 | présence d'Ag |

| Table III | durée recuisson | T° max atteinte par échantillon [°C] | augmentation RL [%] |
|---|---|---|---|
| Ex.49 | 1'13" | 238.5 | 0.50 |
| Ex.50 | 2'08" | 243 | 0.52 |
| Ex.51 | 2'19" | 330 | 0.57 |
| Ex.52 | 1'19" | 242.5 | 1.31 |
| Ex.53 | 2'07" | 364.5 | 1.29 |
| Ex.54 | 3'22" | 429.5 | 1.30 |

| Table IV | (*séchage*) recuisson | durée recuisson | fréquence [kHz] | RL [%] |
|---|---|---|---|---|
| Ex.Comp.9 | (60°C - *1 min)* | - | - | 94.12 |
| Ex.55 | 450 | 1'50" | 900 | 94.86 |
| Ex.56 | 500 | 2' | 900 | 95.12 |
| Ex.57 | 550 | 2'20" | 900 | 95.36 |

## Revendications

1. Procédé de fabrication d'un miroir comprenant une étape de formation d'une couche d'argent sur une surface d'un substrat en verre au cours de laquelle ladite surface est mise en contact avec une solution d'argenture et une étape de peinture au cours de laquelle la couche d'argent est recouverte par au moins une couche de peinture, **caractérisé en ce qu'**il comprend, entre l'étape de formation de la couche d'argent et l'étape de peinture, une étape de recuisson de la couche d'argent à une température d'au moins 200°C.

2. Procédé selon la revendication 1, **caractérisé en ce que** l'étape de recuisson de la couche d'argent est effectuée par au moins une méthode sélectionnée dans le groupe comprenant le chauffage par rayonnement infrarouge, le chauffage par convection, l'induction métallique et le chauffage par micro-ondes.

3. Procédé selon la revendication 2, **caractérisé en ce que** l'étape de recuisson de la couche d'argent est effectuée dans une atmosphère comprenant majoritairement un gaz inerte.

4. Procédé selon l'une des revendications précédentes, **caractérisé en ce que** le miroir est dépourvu de couche de cuivre.

5. Procédé selon l'une des revendications précédentes, **caractérisé en ce qu'**il comprend une étape d'activation du substrat avant l'étape de formation de la couche d'argent, au cours de laquelle le substrat est mis en contact avec une solution comprenant au moins un élément sélectionné dans le groupe consistant en bismuth, chrome, or, indium, nickel, palladium, platine, rhodium, ruthénium, titane, vanadium et zinc.

6. Procédé selon l'une des revendications précédentes, **caractérisé en ce qu'**il comprend une étape de passivation de la couche d'argent, au cours de laquelle le substrat recouvert de la couche d'argent est mis en contact avec une solution comprenant au moins un élément sélectionné dans le groupe consistant en étain, palladium, vanadium, titane, fer, indium, cuivre, aluminium, chrome, lanthane, nickel, l'europium, zinc, platine, ruthénium, rhodium, sodium, zirconium, l'yttrium et cérium.

7. Miroir comprenant un substrat en verre recouvert d'une couche d'argent, elle-même recouverte d'au moins une couche de peinture, **caractérisé en ce que** le substrat comprend une strate supérieure du côté de la couche d'argent comprenant de l'argent, et **en ce que** cette strate enrichie en argent a une épaisseur d'au moins 10 nm.

8. Miroir selon la revendication 7, **caractérisé en ce que** la strate enrichie en argent a une épaisseur d'au moins 20 nm.

9. Miroir selon la revendication 7, **caractérisé en ce que** la strate enrichie en argent a une épaisseur d'au moins 50 nm.

10. Miroir selon l'une des revendications précédentes, **caractérisé en ce que** le substrat comprend une strate supérieure du côté de la couche d'argent comprenant du palladium, et **en ce que** cette strate enrichie en palladium a une épaisseur d'au moins 5 nm.

11. Miroir selon la revendication 10, **caractérisé en ce que** la strate enrichie en palladium a une épaisseur d'au moins 7 nm.

12. Miroir selon l'une des revendications précédentes, **caractérisé en ce que** le substrat est un verre extra-clair.

13. Miroir selon l'une des revendications précédentes, **caractérisé en ce que** la couche d'argent a une épaisseur comprise entre 70 et 150 nm.

14. Miroir selon l'une des revendications précédentes, **caractérisé en ce qu'**il comprend de l'étain présent à la surface du substrat du côté de la couche d'argent.

15. Miroir selon l'une des revendications précédentes, **caractérisé en ce qu'**il est dépourvu de couche de cuivre.

## Claims

1. Process for manufacturing a mirror comprising a step for forming a silver layer on a surface of a glass substrate, during which said surface is brought into contact with a silvering solution, and a painting step, during which the silver layer is covered by at least one paint layer, **characterised in that** between the step for forming the silver layer and the painting step it comprises a step for reheating the silver layer to a temperature of at least 200°C.

2. Process according to claim 1, **characterised in that** the step for reheating the silver layer is conducted by at least one method selected from the group comprising heating by infrared radiation, convection heating, metal induction and microwave heating.

3. Process according to claim 2, **characterised in that** the step for reheating the silver layer is conducted in an atmosphere composed predominantly of an inert gas.

4. Process according to one of the preceding claims, **characterised in that** the mirror has no copper layer.

5. Process according to one of the preceding claims, **characterised in that** before the step for forming the silver layer it includes a step for activating the substrate, during which the substrate is brought into contact with a solution containing at least one element selected from the group comprising bismuth, chromium, gold, indium, nickel, palladium, platinum, rhodium, ruthenium, titanium, vanadium and zinc.

6. Process according to one of the preceding claims, **characterised in that** it includes a step for passivating the silver layer, during which the substrate covered with the silver layer is brought into contact with a solution containing at least one element selected from the group comprising tin, palladium, vanadium, titanium, iron, indium, copper, aluminium, chromium, lanthanum, nickel, europium, zinc, platinum, ruthenium, rhodium, sodium, zirconium, yttrium and cerium.

7. Mirror comprising a glass substrate covered by a silver layer, which is itself covered by at least one paint layer, **characterised in that** the substrate comprises an upper surface stratum on the side of the silver layer containing silver, and **in that** this silver-enriched stratum has a thickness of at least 10 nm.

8. Mirror according to claim 7, **characterised in that** the silver-enriched stratum has a thickness of at least 20 nm.

9. Mirror according to claim 7, **characterised in that** the silver-enriched stratum has a thickness of at least 50 nm.

10. Mirror according to one of the preceding claims, **characterised in that** the substrate comprises an upper surface stratum on the side of the silver layer containing palladium, and **in that** this palladium-enriched stratum has a thickness of at least 5 nm.

11. Mirror according to claim 10, **characterised in that** the palladium-enriched stratum has a thickness of at least 7 nm.

12. Mirror according to one of the preceding claims, **characterised in that** the substrate is an extra-clear glass.

13. Mirror according to one of the preceding claims, **characterised in that** the silver layer has a thickness in the range of between 70 and 150 nm.

14. Mirror according to one of the preceding claims, **characterised in that** it contains tin present on the surface of the substrate on the side of the silver layer.

15. Mirror according to one of the preceding claims, **characterised in that** it has no copper layer.

## Patentansprüche

1. Verfahren zum Herstellen eines Spiegels, das einen Schritt zum Bilden einer Silberschicht auf einer Oberfläche eines Glassubstrats, in dessen Verlauf die Oberfläche mit einer Versilberungslösung in Kontakt gebracht wird, und einen Farbauftragsschritt, in dessen Verlauf die Silberschicht mit wenigstens einer Farbschicht überzogen wird, umfasst, **dadurch gekennzeichnet, dass** es zwischen dem Schritt des Bildens der Silberschicht und dem Farbauftragsschritt einen Schritt des Wiedererwärmens der Silberschicht auf eine Temperatur von wenigstens 200 °C umfasst.

2. Verfahren nach Anspruch 1, **dadurch gekennzeichnet, dass** der Schritt des Wiedererwärmens der Silberschicht durch wenigstens eine Methode ausgeführt wird, die in der Gruppe gewählt wird, die Erhitzen durch Infrarotstrahlung, Erhitzen durch Konvektion, Metallinduktion und Erhitzen durch Mikrowellen umfasst.

3. Verfahren nach Anspruch 2, **dadurch gekennzeichnet, dass** der Schritt des Wiedererwärmens der Silberschicht in einer Atmosphäre ausgeführt wird, die hauptsächlich ein Edelgas enthält.

4. Verfahren nach einem der vorhergehenden Ansprüche, **dadurch gekennzeichnet, dass** der Spiegel keine Kupferschicht enthält.

5. Verfahren nach einem der vorhergehenden Ansprüche, **dadurch gekennzeichnet, dass** es vor dem Schritt des Bildens der Silberschicht einen Schritt des Aktivierens des Substrats umfasst, in dessen Verlauf das Substrat mit einer Lösung in Kontakt gebracht wird, die wenigstens ein Element enthält, das in der Gruppe gewählt wird, die aus Wismut, Chrom, Gold, Indium, Nickel, Palladium, Platin, Rhodium, Ruthenium, Titan, Vanadium und Zink besteht.

6. Verfahren nach einem der vorhergehenden Ansprüche, **dadurch gekennzeichnet, dass** es einen Schritt des Passivierens der Silberschicht umfasst, in dessen Verlauf das mit der Silberschicht überzogene Substrat mit einer Lösung in Kontakt gebracht wird, die wenigstens ein Element enthält, das in der Gruppe gewählt wird, die aus Zinn, Palladium, Vanadium, Titan, Eisen, Indium, Kupfer, Aluminium, Chrom, Lanthan, Nickel, Europium, Zink, Platin, Ruthenium, Rhodium, Natrium, Zirkonium, Yttrium und Cerium besteht.

7. Spiegel, der ein Glassubstrat umfasst, das mit einer Silberschicht überzogen ist, die ihrerseits mit wenigstens einer Farbschicht überzogen ist, **dadurch gekennzeichnet, dass** das Substrat eine obere Lage auf Seiten der Silberschicht aufweist, die Silber enthält, und dass diese silberhaltige Lage eine Dicke von wenigstens 10 nm besitzt.

8. Spiegel nach Anspruch 7, **dadurch gekennzeichnet, dass** die silberhaltige Lage eine Dicke von wenigstens 20 nm besitzt.

9. Spiegel nach Anspruch 7, **dadurch gekennzeichnet, dass** die silberhaltige Lage eine Dicke von wenigstens 50 nm besitzt.

10. Spiegel nach einem der vorhergehenden Ansprüche, **dadurch gekennzeichnet, dass** das Substrat eine obere Lage auf Seiten der Silberschicht aufweist, die Palladium enthält, und dass diese palladiumhaltige Lage eine Dicke von wenigstens 5 nm besitzt.

11. Spiegel nach Anspruch 10, **dadurch gekennzeichnet, dass** die palladiumhaltige Lage eine Dicke von wenigstens 7 nm besitzt.

12. Spiegel nach einem der vorhergehenden Ansprüche, **dadurch gekennzeichnet, dass** das Substrat extraklares Glas ist.

13. Spiegel nach einem der vorhergehenden Ansprüche, **dadurch gekennzeichnet, dass** die Silberschicht eine Dicke im Bereich von 70 bis 150 nm besitzt.

14. Spiegel nach einem der vorhergehenden Ansprüche, **dadurch gekennzeichnet, dass** er Zinn enthält, das auf der Oberfläche des Substrats auf Seiten der Silberschicht vorhanden ist.

15. Spiegel nach einem der vorhergehenden Ansprüche, **dadurch gekennzeichnet, dass** er keine Kupferschicht enthält.
